# EUROPÄISCHE PATENTSCHRIFT

(11) **EP 3 208 391 B1**
(45) Veröffentlichungstag und Bekanntmachung des Hinweises auf die Patenterteilung: **02.09.2020**
(21) Anmeldenummer: 17156297.8
(22) Anmeldetag: 15.02.2017
(51) Int. Cl.: E03C 1/10

(54) **SICHERUNGSEINRICHTUNG**
SAFETY DEVICE
DISPOSITIF DE SÉCURITÉ

(30) Priorität: 18.02.2016 DE 202016100854 U
(43) Veröffentlichungstag der Anmeldung: 23.08.2017
(73) Patentinhaber: Uponor Innovation AB, 73061 Virsbo (SE)
(72) Erfinder: Bartenstein, Paul, 98663 Westhausen (DE); Talonpoika, Ismo, 15140 Lahti (FI)
(74) Vertreter: Epping - Hermann - Fischer

(56) Entgegenhaltungen:
- DE-U1-202005 002 415
- DE-U1-202008 011 255
- US-A- 2 056 357

## Beschreibung

Die Erfindung betrifft eine Sicherungseinrichtung zum Schutz des Trinkwassers gegen Verschmutzung durch Rückfließen.

In verschiedenen Anwendungsfällen sind Sicherungseinrichtungen zum Schutz des Trinkwassers gegen Verschmutzung durch Rückfließen notwendig. Ein Beispielfall ist zum Beispiel eine Spülstation, welche gewährleistet, dass in einem gewissen Wasserstrang das Wasser nicht länger als 72 Stunden steht und nach Überschreiten dieser Zeitgrenze automatisch einen Spülvorgang einleitet.

Hierbei muss gewährleistet sein, dass das abfließende Wasser nicht durch Rückfließen mit dem nachströmenden Trinkwasser in Berührung kommt. Gemäß der Norm EN 1717 ist es nicht erlaubt, dass das abfließende Schmutzwasser in Berührung mit dem nachfließenden Trinkwasser kommt. Schmutzwasser ist in der Kategorie 5 als gesundheitsgefährlich gemäß der Norm EN 1717 einzuordnen. Flüssigkeiten der Kategorie 5 werden laut EN 1717 mit Sicherungseinrichtungen vom Typ AA, AB oder AC abgesichert. Beispielsweise ist eine Produktnorm für Typ AA die DIN EN 13076.

Aus der US 2,056,357 A sind Vakuumbrecher bekannt, die dazu geeignet sind, in der Spülwasserversorgungsleitung eines Schranks oder einer ähnlichen Installationseinrichtung zu wirken, um ein Zurückfließen von Abwasser in die Leitung zu verhindern.

Aus der DE 20 2005 002 415 U1 ist ein Bauteilsatz zum modularen Erstellen einer Ablaufanordnung zum Ableiten von Wasser, das aus einem Trinkwassersystem abgelassen wird, in eine Abwasserleitung bekannt.

Der Erfindung liegt die Aufgabe zugrunde, eine Sicherungseinrichtung zum Schutz des Trinkwassers gegen Verschmutzung durch Rückfließen vorzuschlagen, welche der DIN-Norm EN 13076 sowie DIN EN 1717 entspricht.

Darüber hinaus sollte die Sicherungseinrichtung auch die Prüfnorm W540 des Deutschen Vereins für Gas und Wasser (DVGW) erfüllen.

Erfindungsgemäß wird diese Aufgabe gelöst durch eine Sicherungseinrichtung zum Schutz des Trinkwassers gegen Verschmutzung durch Rückfließen umfassend ein Gehäuse mit einem Trinkwasserzulauf, einem ersten Trichter, der im Abstand und fluchtend unter dem Trinkwasserzulauf angeordnet ist, einem zweiten Trichter, der im Abstand und fluchtend unter dem ersten Trichter angeordnet ist und über welchen das Wasser abfließen kann, wobei eine Öffnung im Gehäuse zum Austritt des rückfließenden Wassers ausgebildet ist, zu welcher das rückfließende Wasser zwischen dem ersten und dem zweiten Trichter strömen kann. Der erste und zweite Trichter sind konisch ausgebildet. Der zweite konische Trichter ist Teil eines Siphons und von einem Siphonstutzen umgeben, welcher mit dem zweiten konischen Trichter als Siphon wirkt. Durch die Ausbildung der Sicherungseinrichtung mit den zwei nacheinander geschalteten Trichtern ist es gewährleistet, dass auch unter Prüfbedingungen kein Wasser an den Trinkwasserzulauf zurückspritzt, sondern das zurückspritzende Wasser über den Raum zwischen dem ersten und dem zweiten Trichter zu der Öffnung im Gehäuse abgeleitet wird.

Die beiden nacheinander geschalteten Trichter sind als konische Trichter ausgebildet. Konisch im Sinne der Anmeldung bedeutet, dass die Wandung des Trichters gerade oder wie in den nachfolgenden Ausführungsbeispielen gezeigt gewölbt konisch verläuft.

Gemäß den oben genannten Vorschriften, insbesondere der EN 13076, ist gefordert, dass der Abfluss verschlossen wird und mit einem Fliessdruck von 10 bar Trinkwasser auf den verschlossen Abfluss geleitet wird. Hierdurch entsteht im zweiten konischen Trichter, über welchen normalerweise das Wasser abfließen kann, ein Wasserspiegel und das mit 10 bar nachströmende Wasser verursacht beim Auftreffen auf den Wasserspiegel eine Rückströmung. Diese trifft seitlich gegen die Unterseite des ersten konischen Trichters und wird durch den Spalt zwischen dem ersten und zweiten konischen Trichter zu der Öffnung geleitet.

Der zweite konische Trichter ist Teil eines Siphons. Zudem ist der zweite konische Teil von einem Siphonstutzen umgeben, sodass das abfließende Wasser an der Außenseite des zweiten konischen Teils aufsteigen und über den Siphonstutzen wieder abfließen kann.

Gemäß einer weiteren bevorzugten Ausführungsform ist das Gehäuse aus einem Deckel und einem Unterteil ausgebildet, wobei der erste konische Trichter lösbar im Deckel und der zweite konische Trichter lösbar im Unterteil aufgenommen ist. Die geteilte Ausbildung des Gehäuses und der lösbare Einbau des ersten konischen Trichters sowie des zweiten konischen Trichters erlaubt die Wartung der Sicherungseinrichtung zum Beispiel bei Verkalkung.

Gemäß einer weiteren bevorzugten Ausführungsform ist im Trinkwasserzulauf ein Strömungsregler verbaut. Der Strömungsregler erlaubt die gezielte Führung des zufließenden Wassers und insbesondere kann im Strömungsregler auch ein Mengenregler verbaut sein, um einen gleichmäßig definierten Wasserstrahl zu erhalten.

Des Weiteren ist es günstig, dass im Deckel Sensoren zum Erkennen einer Überlaufsituation und zum Schließen des Wasserzulaufs verbaut sind. Die erfindungsgemäße Sicherungseinrichtung wird in der Regel hinter einer Vorwand verbaut und durch die Sensoren ist es möglich, dass bei verstopftem Abfluss eine Überlaufsituation und Überschwemmung hinter der Vorwand vermieden wird, da durch die Sensorelemente sofort ein Signal zum Absperren des Wasserzulaufs gegeben werden kann. Dies vermeidet umfangreiche Renovierungsarbeiten aufgrund des überlaufenden Wassers.

Für den normalen Betrieb ist es günstig, wenn zwischen Trinkwasserzulauf und erstem konischen Trichter sowie zwischen erstem konischem Trichter und im zweiten konischen Trichter Laschen zur Wasserführung verbaut sind, die den Trinkwasserzulauf gegen rückspritzendes Wasser schützen und das rückfließende Wasser zur Öffnung lenken.

Des Weiteren ist es günstig, dass der Strömungsregler aus trinkwassergeeigneten Material, zum Beispiel Polyphenylensulfon (PPSU), und der Rest aus einem nicht trinkwassergeeigneten Kunststoff wie ABS (AcrylnitrilButadien-Styrol) hergestellt ist.

Weitere Vorteile der Erfindung sind in den Unteransprüchen sowie in der nachfolgenden Figurenbeschreibung offenbart.

In den Figuren zeigen:
- Figur 1: schematisch einen Badausbau mit einer Spülstation,
- Figur 2: die Spülstation gemäß Figur 1 in vergrößerter Ansicht,
- Figur 3: die Sicherungseinrichtung in Schrägansicht,
- Figuren 4 und 5: die Sicherungseinrichtung in Schrägansicht und Explosionsdarstellung,
- Figur 6: die Sicherungseinrichtung in einer frontalen Schnittansicht,
- Figur 7: die Sicherungseinrichtung in einer seitlichen Schnittansicht und
- Figur 8: die Sicherungseinrichtung in einer schrägen Schnittansicht.

Nachfolgend sind Elemente gleicher Konstruktion und Funktion mit den gleichen Bezugszeichen erläutert und werden nicht separat nochmals erläutert.

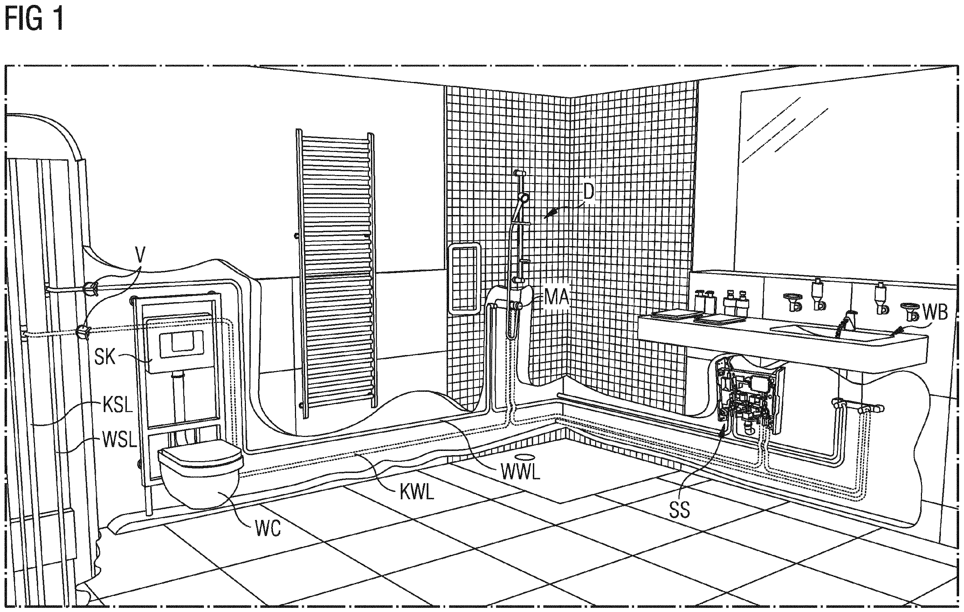

Figur 1 zeigt schematisch ein Badezimmer, in welchem alle Verbraucher über ein sogenanntes Ringleistungssystem verbunden sind. Senkrecht über die Geschosse ist eine Kaltwassersteigleistung KSL und eine Warmwassersteigleitung WSL verlegt. An diese Kaltwassersteigleitung KSL und Warmwassersteigleitung WSL ist jeweils eine Kaltwasserleitung KWL und eine Warmwasserleitung WWL angeschlossen, welche zu den jeweiligen Verbrauchern führt. Im dargestellten Ausführungsbeispiel ist in der Kaltwasserleitung KWL zuerst ein Ventil V vorgesehen und danach ein Spülkasten SK einer Toilette WC angeschlossen. Danach führt die Kaltwasserleitung KWL zu einer Mischarmatur MA einer Dusche D. An dieser Mischarmatur MA ist die Kaltwasserleitung KWL durchgeschlauft und führt weiter zu einer Spülstation SS und danach wiederum weiter zum Kaltwasseranschluss eines Waschbeckens WB. Auch an dem Kaltwasseranschluss ist die Kaltwasserleitung KWL durchgeschlauft und führt zu weiteren Verbrauchern auf der Etage, die in Fig. 1 nicht dargestellt sind. Die Warmwasserleitung WWL ist nicht am Spülkasten SK der Toilette angeschlossen, aber ebenso über eine Reihenleitung mit der Mischarmatur MA der Dusche D, der Spülstation SS sowie dem Waschbecken WB sowie weiteren verbrauchen auf der Etage verbunden.

Durch die sogenannte Ringinstallation der Verbraucher in der Warm- und Kaltwasserleitung ist gewährleistet, dass auch beim Öffnen des Wasserhahns am Waschbecken WB das Wasser durch alle anderen davor angeordneten Verbraucher bewegt wird und somit Leitungsabschnitte vermieden werden, in welchen das Wasser längere Zeit stehen könnte, obwohl gewisse Verbraucher bedient wurden.

Die Gefahr besteht insbesondere darin, dass sich Legionellen bilden, wenn das Wasser über eine längere Zeit steht. Um den Austausch des Wassers nicht dem Zufall zu überlassen, ist im Wasserkreislauf die Spülstation SS integriert.

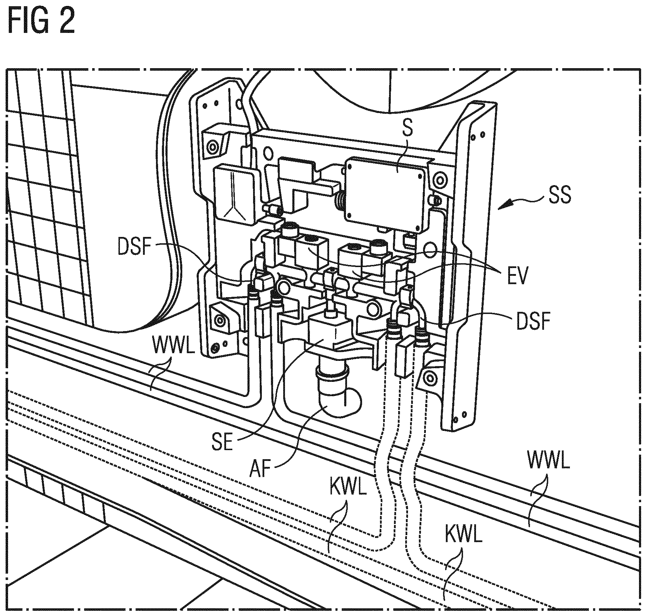

Figur 2 zeigt die Spülstation in vergrößerter Ansicht. An die Spülstation SS ist die Warmwasserleitung WWL sowie auch die Kaltwasserleitung KWL über sogenannte Durchschlauffittings DSF angeschlossen, wobei der dritte Arm der Durchschlauffittings DSF zu einer Sicherungseinrichtung SE führt. In dem dritten Arm der Durchschlauffittings DSF sind elektrisch betätigbare Ventile EV integriert, welche über einen Sensor S angesteuert werden und z.B. nach 72 Stunden die Ventile EV kurz öffnen, sodass zirka 3 l Wasser in die Sicherungseinrichtung SE fließen und von dieser über einen Abfluss AF abgeleitet werden.

Hierdurch gewährleistet die Spülstation SS stets frisches Wasser in der Kaltwasserleitung KWL und Warmwasserleitung WWL und vermeidet die Bildung von Legionellen oder anderen schädlichen Stoffen.

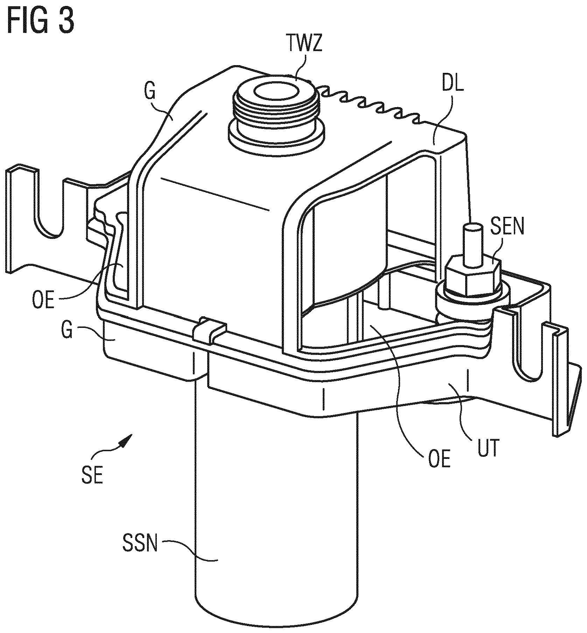

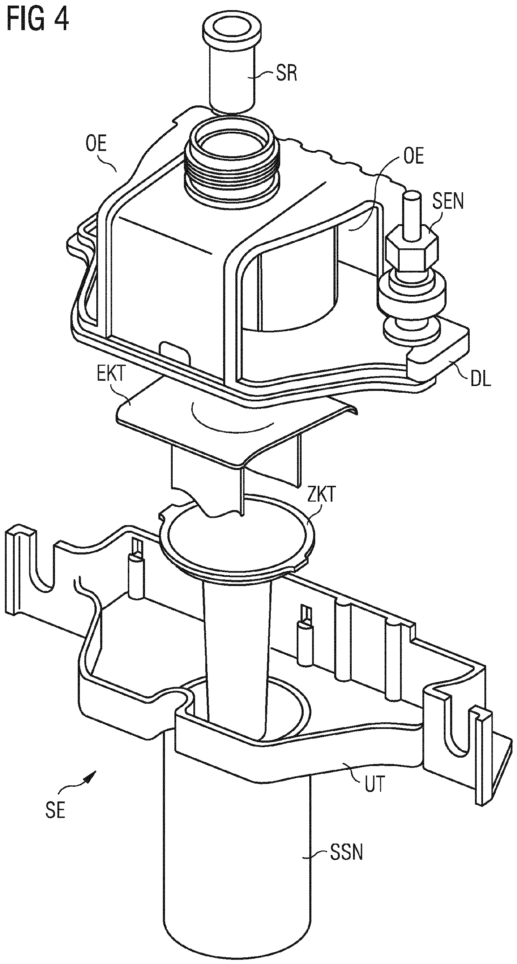

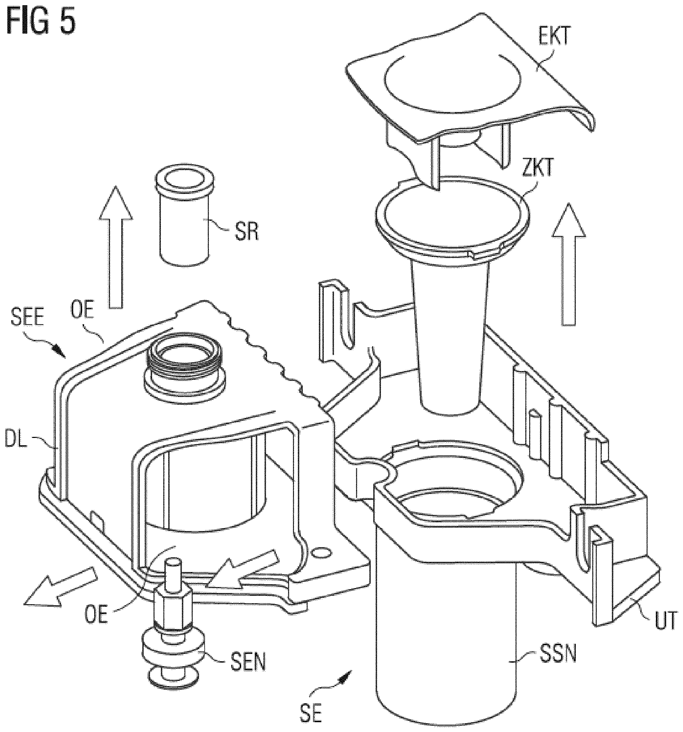

In Figur 3 bis 5 ist die Sicherungseinrichtung
SE in Schrägansicht dargestellt, wobei die Figuren 4 und 5 die Sicherungseinrichtung SE jeweils in Explosionsdarstellung zeigen. Die Sicherungseinrichtung SE weist ein Gehäuse G auf, welches gebildet ist durch einen Deckel DL und ein Unterteil UT. Im Deckel DL ist an der Oberseite ein Trinkwasserzulauf TWZ vorgesehen und am Unterteil UT ein Siphonstutzen SSN, welcher in das Abflussrohr AF (siehe Figur 2) gesteckt werden kann und durch welches das Wasser abgeleitet werden kann.

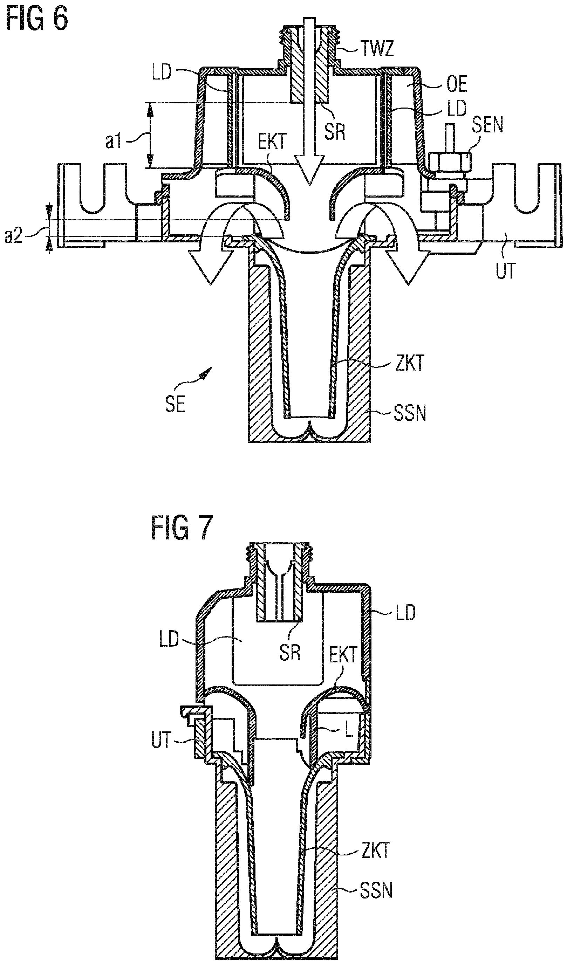

Wie in Figur 4 und 5 dargestellt ist, ist in dem Gehäuse G, gebildet aus Deckel DL und Unterteil UT, ein erster konischer Trichter EKT und ein zweiter konischer Trichter ZKT aufgenommen, wobei der erste konische Trichter EKT fluchtend unter dem Trinkwasserzulauf TWZ und im Abstand zu diesem angeordnet ist, und der zweite konische Trichter ZKT fluchtend unter dem ersten konischen Trichter EKT und im Abstand zu diesem angeordnet ist. Die Anordnung und Montage des ersten konischen Trichters EKT und des zweiten konischen Trichters ZKT wird in den Figuren 6 bis 8 gezeigt und die Wirkungsweise der beiden konischen Trichter wird zu den Figuren 6 bis 8 näher erläutert.

Im Deckelteil DL sind des Weiteren Sensorelemente SEE aufgenommen, welche erkennen, ob im Unterteil UT Wasser steht und automatisch ein Signal an die elektrischen Ventile EV geben, welche die Wasserzufuhr stoppen, um eine Überlaufsituation zu verhindern. Im Gehäuse G sind im Deckelteil DL seitlich Öffnungen OE vorgesehen, welche ein Abfließen des rückfließenden Wassers bei verstopftem Abfluss AF (und Versagen der Sensorelemente S oder elektrischen Ventile EV) ermöglichen.

Am Trinkwasserzulauf ist ein sogenannter Strömungsregler SR integriert, welcher dafür sorgt, dass ein definierter Wasserstrahl entsteht. In dem Strömungsregler kann ein Mengenregler wie zum Beispiel von Neoperl aufgenommen sein.

Der Strömungsregler ist aus trinkwassergeeigneten Material wie zum Beispiel PPSU gebildet. Der Rest der Sicherungseinrichtung SE ist vorzugsweise aus nicht trinkwasserechtem Material wie dem Kunststoff ABS gefertigt. Dies ermöglicht eine günstigere Herstellung der Sicherungseinrichtung, da ABS wesentlich günstiger ist wie trinkwasserechtes Material und nur der Strömungsregler SR mit dem Trinkwasser in Berührung kommt.

Anhand der Figuren 6 bis 8 wird die Funktionsweise der Sicherungseinrichtung SE sowie deren Aufbau im Detail erläutert. Der erste konische Trichter EKT ist mit seiner Oberkante im Abstand a1 zur Unterkante des Strömungsreglers SR in der Sicherungseinrichtung SE verbaut. Der zweite konische Trichter ZKT ist mit dem Abstand a2 zwischen seiner Oberkante und der Unterkante des ersten konischen Trichters EKT in der Sicherungseinrichtung verbaut. Gemäß den Prüferschriften dürfen bei einem Wasserdruck von 10 bar und verschlossenem Abfluss AF keine Spritzer des im zweiten konischen Trichter ZKT stehenden Wassers auf den Trinkwasserzulauf TWZ beziehungsweise an die Unterkante des Strömungsreglers SR spritzen. Dies schreiben die DIN-Normen EN 13076, EN 1717 und auch die Prüfvorschrift W540 des Deutschen Vereins für Gas und Wasser vor. Um dies zu gewährleisten, wird das einströmende Wasser (über einen Pfeil innerhalb des Strömungsreglers SR dargestellt) durch den Strömungsregler SR in den ersten konischen Trichter EKT, welcher im Abstand a1 und fluchtend unter dem Strömungsregler SR angeordnet ist, geleitet, bevor es auf die Wasseroberfläche des im zweiten konischen Trichters ZKT stehenden Wassers trifft. Der Abstand a1, ist entsprechend der Norm DIN 13076 dimensioniert. Das durch den eintreffenden Wasserstrahl zurückspritzende Waser wird durch den ersten konischen Trichter EKT, welcher im Abstand a2 über dem zweiten konischen Trichter EKT angeordnet ist, über dessen Außenwand nach außen abgeleitet (schematisch durch die beiden Pfeile in Fig. 6 dargestellt) und kann durch Öffnungen OE im Gehäuse G abfließen.

Sofern eine Überlaufsituation entsteht, reagieren die Sensorelemente SE und stoppen in der Spülstation SS über die elektrischen Ventile EV, siehe Figur 2, den Zulauf.

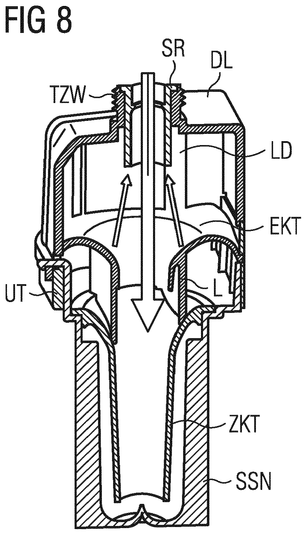

Figur 7 zeigt die Darstellung aus Figur 6 in einer um 90° gedrehten Schnittansicht. Figur 8 zeigt die Ansicht gemäß Figur 7 in leicht geschwenkter Form. Zwischen dem ersten konischen Trichter EKT und dem zweiten konischen Trichter ZKT sind Laschen L ausgebildet, welche, wie in Figur 6 und 7 dargestellt, jedoch nur an zwei Seiten parallel verlaufen. Die Laschen L lenken das rückfließende oder rückspritzende Wasser an die Unterseite des ersten konischen Trichters EKT und zwar in dem Bereich, wo im Deckelteil DL die Öffnungen OE ausgebildet sind. Somit leiten die Laschen L das rückspritzende Wasser zu den Öffnungen OE.

Ebenso sind zwischen dem Deckelteil DL und dem ersten konischen Trichter EKT Laschen LD ausgebildet. Diese sind flächig innerhalb der Öffnungen OE und nach innen versetzt angeordnet und erstrecken bis zum Rand des ersten konischen Trichters EKT. Die Laschen LD sind halb rund ausgebildet und entsprechend der Norm DIN 13076 zumindest mit dem Maß 2 x a1 vom Trinkwasserzulauf TWZ beabstandet. Die Laschen LD vermeiden in einer Überlaufsituation, dass das durch die Öffnungen OE abgeleitete Wasser zurück zum Trinkwasserzulauf TWZ insbesondere der Unterseite des Strömungsreglers SR spritzen kann. Im normalen Betrieb vermeiden die Laschen LD auch ein Spritzen des Wassers durch die Öffnungen OE nach außen.

### Bezugszeichenliste

- a1: Abstand Strömungsregler - erster konischer Trichter
- a2: Abstand erster konischer Trichter - zweiter konischer Trichter
- AF: Abfluss
- D: Dusche
- DL: Deckel
- DSF: Durchschlauffitting
- EKT: erster konischer Trichter
- EV: elektrisches Ventil
- KSL: Kaltwassersteigleitung
- KWL: Kaltwasserleitung
- L: Lasche zweiter konischer Trichter
- LD: Lasche Deckelteil
- MA: Mischarmatur
- S: Sensor
- SE: Sicherungseinrichtung
- SEE: Sensorelemente
- SK: Spülkasten
- SR: Strömungsregler
- SS: Spülstation
- SSN: Siphonstutzen
- TWZ: Trinkwasserzulauf
- UT: Unterteil
- V: Ventil
- WB: Waschbecken
- WC: Toilette
- WSL: Warmwassersteigleitung
- WWL: Warmwasserleitung
- ZKT: zweiter konischer Trichter

## Patentansprüche

1. Sicherungseinrichtung (SE) zum Schutz des Trinkwassers gegen Verschmutzung durch Rückfließen umfassend:
- ein Gehäuse (G) mit
- einem Trinkwasserzulauf (TWZ),
- einem ersten Trichter (EKT), der im Abstand und fluchtend unter dem Trinkwasserzulauf (TWZ) angeordnet ist,
- einem zweiten Trichter (ZKT), der im Abstand und fluchtend unter dem ersten Trichter (EKT) angeordnet ist und über welchen das Wasser abfließen kann,
- wobei eine Öffnung (OE) im Gehäuse (G) zum Austritt des rückfließenden Wassers ausgebildet ist, zu welcher das rückfließende Wasser zwischen dem ersten Trichter (EKT) und dem zweiten Trichter (ZKT) strömen kann,
wobei der erste und zweite Trichter konisch ausgebildet sind, **dadurch gekennzeichnet, dass** der zweite konische Trichter (ZKT) Teil eines Siphons ist und von einem Siphonstutzen (SSN) umgeben ist, welcher mit dem zweiten konischen Trichter (ZKT) als Siphon wirkt.

2. Sicherungseinrichtung nach Anspruch 1,
**dadurch gekennzeichnet, dass**
das Gehäuse aus einem Deckel (DL) und einem Unterteil (UT) ausgebildet ist und der erste konische Trichter (EKT) im Deckel (DL) und der zweite konische Trichter (ZKT) im Unterteil (UT) aufgenommen ist.

3. Sicherungseinrichtung nach einem der Ansprüche 1 bis 2,
**dadurch gekennzeichnet, dass**
im Trinkwasserzulauf (TWZ) ein Strömungsregler (SR) verbaut ist.

4. Sicherungseinrichtung nach einem der Ansprüche 2 oder 3,
**dadurch gekennzeichnet, dass**
im Deckel (DL) Sensorelemente (SE) zum Erkennen einer Überlaufsituation und zum Ausgeben eines Signals zum Schließen des Wasserzulaufs verbaut sind.

5. Sicherungseinrichtung nach einem der Ansprüche 1 bis 4,
**dadurch gekennzeichnet, dass**
zwischen dem Trinkwasserzulauf (TWZ) und dem ersten konischen Trichter (EKT) Laschen (LD) verbaut sind.

6. Sicherungseinrichtung nach einem der Ansprüche 1 bis 5,
**dadurch gekennzeichnet, dass**
zwischen dem ersten konischen Trichter (EKT) und dem zweiten konischen Trichter (ZKT) Laschen (L) angeordnet sind.

7. Sicherungseinrichtung nach Anspruch 3 oder einem der Ansprüche 2, 4, 5, 6 in Verbindung mit Anspruch 3,
**dadurch gekennzeichnet, dass**
der Strömungsregler (SR) aus trinkwasserechtem Material wie zum Beispiel PPSU und der Rest der Sicherungseinrichtung aus nicht trinkwasserechtem Material wie zum Beispiel ABS hergestellt ist.

8. Sicherungseinrichtung nach einem der Ansprüche 1 bis 7,
**dadurch gekennzeichnet, dass**
sie als Teil einer Spülstation ausgebildet ist.

9. Sicherungseinrichtung nach einem der Ansprüche 1 bis 8,
**dadurch gekennzeichnet, dass**
sie in einer Spülstation hinter einer Vorwand verbaubar ist und durch eine Revisionsöffnung komplett zerlegbar ist.

## Claims

1. A safety device (SE) for protecting drinking water from contamination due to backflowing, comprising:
- a housing (G) having
- a drinking water inlet (TWZ),
- a first funnel (EKT) arranged at a distance and to be aligned below the drinking water inlet (TWZ),
- a second funnel (ZKT) arranged at a distance and to be aligned below the first funnel (EKT), and via which the water can flow off,
- wherein an opening (OE) in the housing (G) is formed for the exit of the backflowing water, to which opening the backflowing water can flow between the first funnel (EKT) and the second funnel (ZKT),
wherein the first and second funnel are formed in a cone-shape,
**characterized in that**
the second cone-shaped funnel (ZKT) is part of a siphon and surrounded by a siphon connecting piece (SSN), which, together with the second cone-shaped funnel (ZKT), acts as a siphon.

2. The safety device according to claim 1,
**characterized in that**
the housing is formed of a cover (DL) and a lower part (UT), and the first cone-shaped funnel (EKT) is accommodated in the cover (DL) and the second cone-shaped funnel (ZKT) is accommodated in the lower part (UT).

3. The safety device according to any one of claims 1 to 2,
**characterized in that**
a flow controller (SR) is installed in the drinking water inlet (TWZ).

4. The safety device according to any one of claims 2 or 3,
**characterized in that**
sensor elements (SE) for identifying an overflow situation and for outputting a signal for closing the water inlet are installed in the cover (DL).

5. The safety device according to any one of claims 1 to 4,
**characterized in that**
tabs (LD) are installed between the drinking water inlet (TWZ) and the first cone-shaped funnel (EKT).

6. The safety device according to any one of claims 1 to 5,
**characterized in that**
tabs (L) are arranged between the first cone-shaped funnel (EKT) and the second cone-shaped funnel (ZKT).

7. The safety device according to claim 3 or any one of claims 2, 4, 5, 6 in conjunction with claim 3,
**characterized in that**
the flow controller (SR) is made of a drinking water-compatible material such as, for example PPSU, and the remainder of the safety device is made of a drinking water-incompatible material such as, for example, ABS.

8. The safety device according to any one of claims 1 to 7,
**characterized in that**
it is formed as a part of a rinsing station.

9. The safety device according to any one of claims 1 to 8,
**characterized in that**
it may be installed in a rinsing station behind a front wall and may be completely demounted through an inspection opening.

## Revendications

1. Dispositif de sécurité (SE) destiné à protéger l'eau potable contre la pollution par reflux, comprenant :
- un boîtier (G) avec
- une arrivée d'eau potable (TWZ),
- un premier entonnoir (EKT) qui est disposé à distance et en alignement sous l'arrivée d'eau potable (TWZ),
- un deuxième entonnoir (ZKT) qui est disposé à distance et en alignement sous le premier entonnoir (EKT) et par lequel l'eau peut s'écouler,
- sachant qu'une ouverture (OE) dans le boîtier (G) est constituée pour la sortie de l'eau de reflux, vers laquelle l'eau de reflux peut couler entre le premier entonnoir (EKT) et le deuxième entonnoir (ZKT),
sachant que le premier et le deuxième entonnoir sont constitués de manière conique,
**caractérisé en ce que** le deuxième entonnoir (ZKT) conique fait partie d'un siphon et est entouré d'une tubulure de siphon (SSN), laquelle agit comme siphon avec le deuxième entonnoir (ZKT) conique.

2. Dispositif de sécurité selon la revendication 1,
**caractérisé en ce que**
le boîtier est constitué d'un couvercle (DL) et d'une partie inférieure (UT) et le premier entonnoir (EKT) conique est logé dans le couvercle (DL) et le deuxième entonnoir (ZKT) conique est logé dans la partie inférieure (UT).

3. Dispositif de sécurité selon l'une des revendications 1 à 2,
**caractérisé en ce que**
un régulateur de débit (SR) est intégré dans l'arrivée d'eau potable (TWZ).

4. Dispositif de sécurité selon l'une des revendications 2 ou 3,
**caractérisé en ce que**
des éléments de capteur (SE) sont intégrés dans le couvercle (DL) pour la détection d'une situation de débordement et pour l'émission d'un signal pour la fermeture de l'arrivée d'eau.

5. Dispositif de sécurité selon l'une des revendications 1 à 4,
**caractérisé en ce que**
des languettes (LD) sont intégrées entre l'arrivée d'eau potable (TWZ) et le premier entonnoir (EKT) conique.

6. Dispositif de sécurité selon l'une des revendications 1 à 5,
**caractérisé en ce que**
des languettes (L) sont disposées entre le premier entonnoir (EKT) conique et le deuxième entonnoir (ZKT) conique.

7. Dispositif de sécurité selon la revendication 3 ou l'une des revendications 2, 4, 5, 6 en liaison avec la revendication 3,
**caractérisé en ce que**
le régulateur de débit (SR) est fabriqué en matériau adapté à l'eau potable comme par exemple du PPSU et le reste du dispositif de sécurité est fabriqué dans un matériau non adapté à l'eau potable comme par exemple de l'ABS.

8. Dispositif de sécurité selon l'une des revendications 1 à 7,
**caractérisé en ce que**
il est constitué comme partie d'une station de rinçage.

9. Dispositif de sécurité selon l'une des revendications 1 à 8,
**caractérisé en ce que**
il est apte à être intégré dans une station de rinçage derrière une paroi avant et peut être entièrement démonté par une ouverture de révision.
